# EUROPÄISCHE PATENTSCHRIFT

(11) **EP 0 568 754 B1**
(45) Veröffentlichungstag und Bekanntmachung des Hinweises auf die Patenterteilung: **06.08.1997**
(21) Anmeldenummer: 92810338.1
(22) Anmeldetag: 08.05.1992
(51) Int. Cl.: B21B 1/38, B21B 3/00

(54) **Herstellung von dünnwandigen, bei erhöhter Temperatur korrosionsanfälligen Metallteilen**
Manufacture of thin metal articles, which are corrosion-sensitive at high temperatures
Fabrication de pièces métalliques minces sensitives en corrosion à hautes températures

(43) Veröffentlichungstag der Anmeldung: 10.11.1993
(73) Patentinhaber: SULZER INNOTEC AG, CH-8401 Winterthur (CH)
(72) Erfinder: Blank-Bewersdorff, Margret, Dr., CH-8046 Zürich (CH); Peters, John Antony, Dr., CH-8404 Winterthur (CH)
(74) Vertreter: Heubeck, Bernhard

(56) Entgegenhaltungen:
- EP-A- 0 374 094
- US-A- 2 645 842
- US-A- 2 985 945
- US-A- 3 122 423
- US-A- 4 966 816
- PATENT ABSTRACTS OF JAPAN vol. 010, no. 115 (M-474)30. April 1986 & JP-A-60 244491 (KOBE SEIKOSHO K.K ) 4.12.1985

## Beschreibung

Die Erfindung betrifft ein Verfahren gemäss Oberbegriff von Anspruch 1 sowie ein Paket zum Durchführen des Verfahrens. Das reaktive Metall, das umgeformt wird, ist bei erhöhter Temperatur korrosionsanfällig und insbesondere oxidationsanfällig. Die Warmumformung erfolgt vorzugsweise mittels einer konventionellen Warmwalzeinrichtung. Die dünnwandigen Metallteile, die nach dem gattungsgemässen Verfahren erzeugt werden, sind vorzugsweise Metallfolien. Das reaktive Metall bildet zusammen mit Kapsel und Trennmittel ein sandwichartiges Paket. Die Kapsel, die aus mindestens zwei Teilen (Deckscheiben) zusammengeschweisst wird, schliesst das reaktive Metall gasdicht gegen die Umgebung ab (dank kontinuierlicher Schweissnaht) und verhindert so Qualitätsverluste, die beispielsweise aufgrund von Oxidation entstehen würden. Die Trennmittel, die sich gegenüber dem reaktiven Metall inert verhalten, sorgen dafür, dass es zwischen reaktivem Metall und Kapsel während der Warmumformung nicht zu einer metallurgischen Verbindung kommt. Beim Warmwalzen verformen sich die Trennmittel plastisch unter dem erzeugten Druck oder sie verfliessen wie eine hochviskose Flüssigkeit; dabei bilden sie zwischen den Metallen stets eine gleichmässige, zusammenhängende Trennschicht. Andererseits sind die Trennmittel bei Umgebungstemperatur spröde, sodass sich die umgeformten Metalle leicht voneinander trennen lassen.

Das gattungsgemässe Verfahren zur Folienherstellung ist aus der EP-A-0374094 bekannt: Ein blechförmiges Metallstück wird von einer Kapsel umhüllt, die sich aus zwei Deckscheiben und einem rahmenartigen Zwischenstück zusammensetzt. Das reaktive Metall, aus dem dieses Metallstück besteht, ist beispielsweise ein Titan-Aluminid (Ti₃Al-Basis-Legierung), das bei rund 1000°C umformbar ist. Als Trennmittel, die gegenüber Titan-Aluminiden inert sind, werden Metallhalogenide vorgeschlagen, insbesondere Kalziumfluorid (CaF₂, Schmelzpunkt 1360°C). Das Trennmittel wird in Vertiefungen der Kapsel-Deckscheiben gefüllt, wobei Schichten von 0,4 bis 2mm Dicke erzeugt werden. Vorzugsweise wird das Trennmittel, das als Pulver vorliegt, durch ein thermisches Spritzverfahren (z.B. atmosphärisches Plasmaspritzen) aufgetragen; dabei bleiben vorteilhafterweise Lufteinschlüsse aus. Bei anderen Auftragsverfahren, bei denen das Trennmittel in Form einer wässrigen Lösung oder als Aufschlämmung aufgestrichen oder aufgespritzt wird, entstehen poröse, Luft enthaltende Schichten.

Das bekannte Verfahren, durch das sich zwar Folien guter Qualität herstellen lassen, ist teuer. Besonders die Herstellung der walzfertigen Kapsel erfordert mehrere kostenintensive Fertigungsschritte (Ausfräsen der Vertiefungen, Herstellung des Rahmens, Schweissen der Kapsel mit zwei gasdichten Schweissnähten). Um die Konkurrenzfähigkeit zu verbessern, ist daher bezüglich der Kapselherstellung nach Einsparungsmöglichkeiten zu suchen. Auch hinsichtlich des Verfahrens, wie das Trennmittel auf die Kapselwand aufgebracht wird (nämlich thermisches Spritzverfahren), ist zu prüfen, ob nicht auch kostengünstigere Verfahren (beispielsweise Auftrag mittels Aufschlämmung) zum Ziel führen.

Versuche, Kalziumfluorid als wässrige Lösung mit einer Spritzvorrichtung aufzutragen (mit anschliessendem Trocknen der Schicht in einem Ofen), führten zu relativ guten Ergebnissen. Somit war klar, dass auf das teure thermische Spritzen grundsätzlich verzichtet werden kann. Jedoch sind die Oberflächeneigenschaften der neu hergestellten Folien noch unbefriedigend: die Rauhigkeit ist zu gross und es ist eine mechanische Überarbeitung der Oberfläche mittels Schleifens und Polierens nötig. (Mit dem Schleifen werden gleichzeitig Resten des Trennmittels, die an der Oberfläche haften, entfernt.)

Das Schleifen der Folienoberfläche muss sehr sorgfältig durchgeführt werden, um ein Einreissen der Folie zu vermeiden. Je grösser die Rauheit ist, desto grösser ist auch die Gefahr eines solchen Einreissens; ausserdem geht durch das Schleifen auch mehr Material verloren. Es ist Aufgabe der Erfindung, das bekannte Verfahren zur Herstellung von Folien solcherart weiterzubilden, dass die Rauheit der erzeugten Folie (unmittelbar nach dem Umformen sowie Entfernen der Kapsel) geringere Werte aufweist. Diese Aufgabe wird mittels der Massnahmen gelöst, die durch die kennzeichnenden Merkmale des Anspruchs 1 gegeben sind.

Die Verbesserung der Rauheitswerte durch das erfindungsgemässe Verfahren konnte experimentell nachgewiesen werden. Rauheitsmessungen an fünfzehn Folien (70 Messwerte), die nach dem alten Verfahren und mit Kalziumfluorid als Trennmittel hergestellt worden waren, ergaben für die Rauheit Rₐ (= arithmetische Mittenrauheit) den Mittelwert 1,59 m bei einer Standartabweichung von 0,89 m. Beim erfindungsgemässen Verfahren wurde als Trennmittel für die erste Schicht Bornitrid (BN, Schmelzpunkt ca. 3000°C) verwendet, das in Form einer wässrigen Lösung (10% BN) auf die umzuformenden Titanaluminid-Bleche aufgestrichen wurde. Für die zweite Schicht wurde wieder Kalziumfluorid verwendet. Rauheitsmessung an Folien (ebenfalls 15 Stück), die nach dem erfindungsgemässen Verfahren erzeugt worden waren, ergaben für Rₐ den Mittelwert 1,47 µm und die Standartabweichung 0,45 µm. Wie ersichtlich ist, führt das neue Verfahren zu einer Verbesserung, die besonders bezüglich der Standartabweichung markant ist.

Das verwendete Kalziumfluorid besteht aus Pulverpartikeln, deren Durchmesser eine Grössenverteilung beispielsweise zwischen rund 1 und 20 µm aufweisen; die Pulverpartikel sind porös und werden durch ballige Agglomerate von schuppenartigen Kristallen gebildet. Die mit Kalziumfluorid gebildete Trennschicht ist ein Haufwerk von Partikeln und weist daher einen relativ grossen Leerraumanteil (rund 40%) auf. Die Pulverpartikel des Bornitrids sind etwas kleiner als beim Kalziumfluorid (beispielsweise zwischen rund 1 und 10 µm); allerdings sind diese Partikel keine Agglomerate sondern scheibchenförmige Kristalle, die eine wesentlich dichtere Packung als die Kalziumfluorid-Partikel ergeben und insbesondere eine bessere Abdeckung der Oberfläche des reaktiven Metalls bilden.

Dank der dichteren Abdeckung durch das Bornitrid ist die Oberfläche des Titanaluminids besser gegen den Sauerstoff abgeschirmt, der sich im Leerraum zwischen den Partikeln des Trennmittels befindet. Durch die Oxidation, die sich bei erhöhten Temperaturen an den nicht bedeckten Stellen der Oberfläche ergibt, wird die Gefügestruktur des Metalls und damit die Duktilität beeinträchtigt. Das Entstehen der Rauheit der Folien kann zumindest teilweise als Folge der schädlichen Einwirkung, die der Sauerstoff auf das reaktive Metall hat, verstanden werden. Durch die erfindungsgemässe Massnahme, das reaktive Metall mittels einer besonderen Schicht besser abzuschirmen, ergibt sich die gewünschte Verringerung der Rauheit.

Ausser Bornitrid kommen auch andere Nitride (z.B. Siliziumnitrid) sowie Oxide (z.B. Zirkonoxid) oder Karbide in Frage. Als umzuformende Metalle kommen ausser Titanaluminid auch andere metallische Phasen (z.B. Aluminide, Silizide) in Frage; ausserdem auch Beryllium-, Niob-, Molybdän-, Tantal-, Wolfram- oder Titan-basis-Legierungen.

Nachfolgend wird die Erfindung im Zusammenhang mit den Zeichnungen näher erläutert. Es zeigen:
- Fig. 1: ein Walzenpaar beim Verformen eines gekapselten Metallstückes,
- Fig. 2: Längsschnitt durch das gekapselte Metallstück der Fig.1,
- Fig. 3: Querschnitt durch ein Ausführungsbeispiel eines erfindungsgemäss gekapselten Metallstückes,
- Fig. 4: weitere Ausführungsbeispiele der erfindungsgemässen Kapselung,
- Fig. 5: Trennmittelschicht aus Bornitrid (5000-fache Vergrösserung, nach REM-Bild gezeichnet),
- Fig. 6: Trennmittelschicht aus Kalziumfluorid (Darstellung wie in Fig.5) und
- Fig. 7: Schrägbild des erfindungsgemässen Schichtaufbaus der Trennmittel.

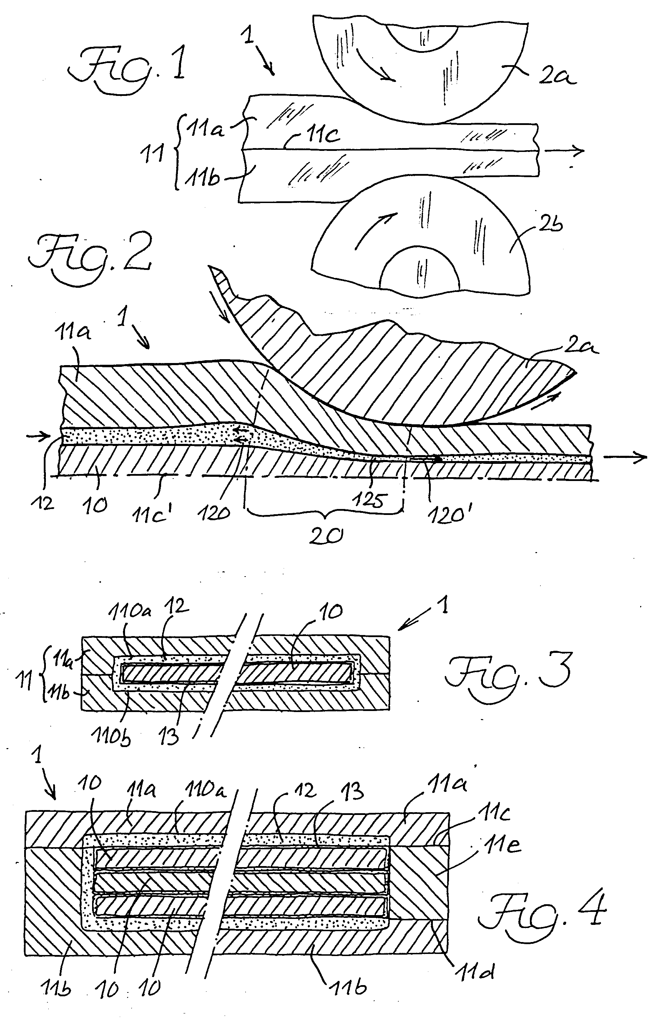

Durch die beiden sich gegenläufig drehenden Walzen 2a und 2b in der Fig.1 wird das Paket 1, das aus einem gekapselten reaktiven Metall besteht, bei erhöhter Temperatur (rund 1000°C) umgeformt. Die Kapsel 11 des Pakets 1 besteht aus zwei Teilen, nämlich den Deckscheiben 11a und 11b, die über eine Schweissnaht 11c miteinander verbunden sind. Durch die Längsschnittszeichnung der Fig.2, in der nur die obere Hälfte der Anordnung von Fig.1 dargestellt ist (Symmetrieachse 11c'), wird der Umformvorgang illustriert. Zwischen dem Metallstück 10, das aus dem reaktiven Metall besteht, und der oberen Deckschicht 11a bildet ein Trennmittel, beispielsweise Kalziumfluorid, die Trennschicht 12. In der Umformzone 20 findet unter den Druckkräften, die durch das Walzenpaar 2a, 2b ausgeübt werden, eine Querschnittsabnahme des Pakets 1 statt. Mittels mehrfacher Walzdurchgänge kann die Querschnittshöhe des Metallstückes 10 von anfänglich beispielsweise 3 mm auf schliesslich 0,15 mm verkleinert werden.

Die Trennschicht 12 muss während des Umformprozesses ein plastisches Verhalten aufweisen, das der Duktilität des Kapselmaterials bzw. des reaktiven Materials entspricht; insbesondere muss sie Scherkräfte von der Deckschicht 11a (bzw. 11b) auf das Metallstück 10 übertragen können. Andererseits muss das Trennmittel gegenüber dem reaktiven Metall inert sein und darf daher insbesondere selbst nicht metallisch sein. Das Trennmittel kann beschränkt fliessfähig (d.h. hochviskos) sein - vergleichbar mit einem noch festen Glas in der Nähe dessen Schmelzpunktes. Wegen der Fliessfähigkeit ergibt sich ein gewisser Massetransport des Trennmittels aus der Umformzone 20, welcher in Fig.2 durch die Pfeile 120 und 120' angedeutet ist. Das Trennmittel in der weiteren Umgebung verhindert dank seines Vermögens, Scherkräfte zu übertragen, ein unkontrolliertes Wegfliessen aus der Umformzone 20, sodass dank eines stets zusammenhängenden Films 125 eine metallurgische Verbindung zwischen der Kapsel 11 und dem Metallstück 10 unterbleibt. Mit Kalziumfluorid ist ein Stoff gefunden worden, der den genannten Erfordernissen genügt. Hingegen Bornitrid, dessen Schmelzpunkt rund 2000°C über der Walztemperatur liegt, weist die nötige Fliessfähigkeit nicht auf. Allerdings in Kombination mit Kalziumfluorid - wie es die Lehre der Erfindung vorsieht - ist die Verwendung des Bornitrids möglich; und in dieser Kombination kann die Eigenschaft des Bornitrids, das reaktive Metall dichter als Kalziumfluorid abzudecken, genutzt werden.

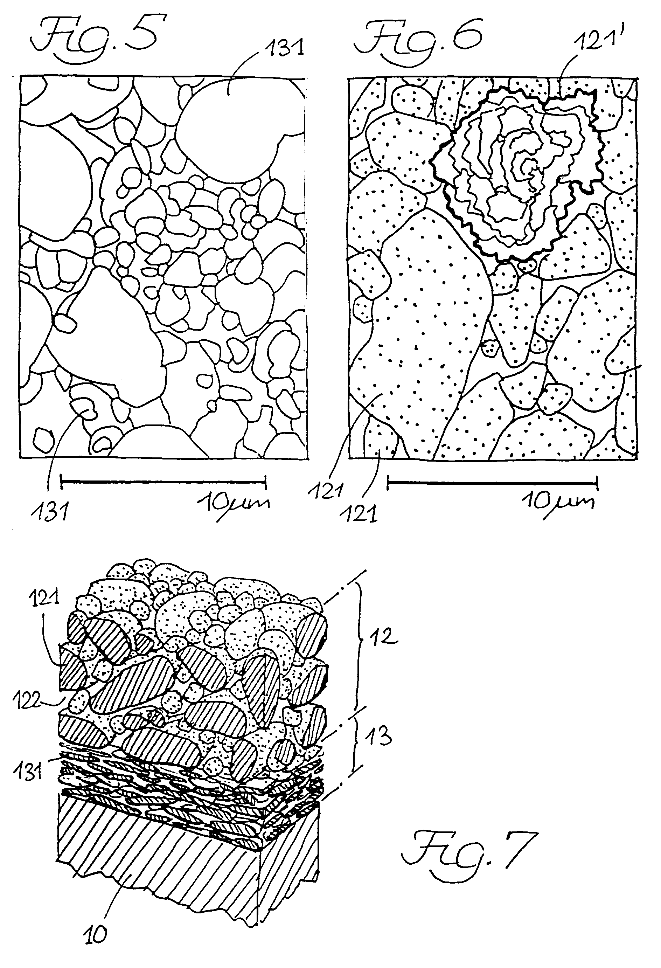

Der Querschnitt durch das Paket 1 in Fig.3 zeigt eine symmetrische Kapsel 11, bei der die Vertiefungen 110a und 110b in den Deckscheiben 11a und 11b so tief ausgeführt sind, dass neben den Trennmitteln auch das Metallstück 10 Platz findet. Die Trennmittel bilden erfindungsgemäss zwei Schichten: die Schicht 12 mit dem fliessfähigen Trennmittel (z.B. Kalziumfluorid) und die Schicht 13 mit dem abdeckenden Trennmittel (z.B. Bornitrid). Die Schicht 13 wird auf das Metallstück 10 aufgetragen; die Schicht 12 wird vorzugsweise in die Vertiefungen 110a bzw. 110b eingebracht.

Es können - wie Versuche gezeigt haben - statt eines Metallstückes 10 auch zwei oder mehr Stücke in der gleichen Kapsel 11 umgeformt werden; und es genügt dabei, dass benachbarte Metallstücke 10 lediglich durch die Bornitrid-Trennschicht voneinander separiert werden. In Fig.4 ist ein Paket 1 mit drei Metallstücken 10 aus reaktivem Metall dargestellt, wobei gleichzeitig zwei Ausführungsmoglichkeiten der Kapsel 11 gezeigt sind.

Auf der linken Seite der Fig.4 ist die Kapsel 11 asymmetrisch: in der Deckschicht 11a ist die Vertiefung 110a nur für die Aufnahme des Trennmittel vorgesehen; die andere Kapselhälfte 11b ist trogartig ausgebildet und bietet zusätzlich Platz für die Metallstücke 10. Diese Ausbildung der Kapsel kann noch weiter vereinfacht werden, indem für die Deckschicht 11a eine Platte ohne Vertiefung 110a verwendet wird. In diesem Fall muss bei der trogartigen Kapselhälfte 11b selbstverständlich auch Raum für die Trennschicht 12 zwischen dem obersten Metallstück 10 und der Deckplatte 11a freigehalten werden.

Auf der rechten Seite der Fig.4 ist ein Kapselaufbau dargestellt. Hier wird ein rahmenförmiges Zwischenstück 11e durch zwei Schweissnähte 11c und 11d mit den beiden Deckscheiben 11a und 11d zur Kapsel 11 verbunden. Anders als bei der EP-A-0374094 ist hier keine Einschränkung auf die Kapselung eines einzigen Metallstückes 10 vorgesehen. Nach der bekannten Lehre soll ein Stapel von Paketen verwendet werden, um gleichzeitig mehrere Metallfolien herzustellen.

Mit der Fig.5 soll eine Vorstellung vermittelt werden, wie die Bornitridschicht in Draufsicht bei 5000-facher Vergrösserung aussieht. Es sind nur die Umrisse der einzelnen Pulverpartikel 131 gezeichnet. Die Partikel zeigen ziemlich glatte Oberflächen; diese sind parallel zur Zeichenebene ausgerichtet. Der waagrechte Balken am unteren Rand des dargestellten Ausschnittes entspricht einer Länge von 10 µm. Für Kalziumfluorid, wie es als Trennmittel verwendet wird, ist ein entsprechendes Bild in Fig.6 zu sehen. Die Pulverpartikel 121, deren räumliche Erscheinung in diesem Bild nicht zum Ausdruck kommt, sind porös (durch Punkte angedeutet). Wie für ein Partikel 121' angedeutet ist, erscheinen die Partikel als Agglomerate von schuppenförmigen Kristallen. In Fig.7 schliesslich ist dargestellt, dass die Kalziumfluorid-Partikel 121 der Schicht 12 ein Haufwerk mit einem relativ grossen Leerraum 122 bilden und dass durch die Bornitrid-Partikel 131 der Schicht 13 eine relativ gute Abdeckung des Metallstücks 10 gegeben ist.

Ausgangspunkt der Erfindung war, die pulverförmigen Trennmittel in Wasser dispergiert auf die Deckscheiben der Kapsel aufzutragen. Es ist aber auch möglich, eine Dispersion mit organischen, leichtflüchtigen Flüssigkeiten, beispielsweise Propanol, herzustellen. (Vorteilhafter als Propanol hat sich ein Gemisch von Propanol mit Terpineol - einem Gemisch verschiedener Alkohole - erwiesen. Es lassen sich den Dispersionsmittel auch harzartige Binder zumischen). In allen Fällen ist es jedoch wichtig, dass anschliessend an das Auftragen des Trennmittels dafür gesorgt wird, dass sich die Flüssigkeiten beispielsweise durch Trocknen in einem Ofen wieder verflüchtigen.

## Patentansprüche

1. Verfahren zur Herstellung von dünnwandigen Metallteilen aus reaktivem Metall durch eine Warmumformung eines Pakets (1), das ein reaktives Metallstück (10) und eine Kapsel (11) umfasst, wobei das reaktive Metall in die aus einem zweiten, plastisch verformbaren Metall bestehende Kapsel sowie Trennmitteln aus Pulverpartikeln (121, 131) eingebettet ist,
dadurch gekennzeichnet, dass die Trennmittel zwischen Kapselwand und reaktivem Metall in mindestens zwei Schichten (12, 13) aufgetragen werden, wobei die erste, auf das reaktive Metall aufgebrachte Schicht (13) aus Partikeln (131) zusammengesetzt ist, die scheibchenartig sind, die zwecks Abschirmung des reaktiven Metalls gegen Sauerstoff eine wesentlich dichtere Packung als die Pulverpartikel (121) einer zweiten Schicht (12) bilden und die aus feinkörnigem Bornitrid, Siliziumnitrid, Zirkoniumoxid oder einem zu Bornitrid ähnlichen, sauerstoffabschirmenden Stoff bestehen, und wobei die zweite Schicht (12) aus einem Trennmittel besteht, das gegenüber dem reaktiven Metall (10) inert sowie nicht metallisch ist, und das bei der Warmumformung plastisch verformbar oder hochviskos fliessfähig ist.

2. Verfahren nach Anspruch 1 dadurch gekennzeichnet, dass das reaktive Metall (10) eine intermetallische Phase ist.

3. Verfahren nach einem der Ansprüche 1 oder 2, dadurch gekennzeichnet, dass das Trennmittel der zweiten Schicht (12) aus einem Stoff besteht, der zu den Metallhalogeniden, insbesondere Metallfluoriden gehört.

4. Verfahren nach Anspruch 3, dadurch gekennzeichnet, dass der Stoff Kalzium-Fluorid (CaF₂) ist.

5. Verfahren nach einem der Ansprüche 1 bis 4, dadurch gekennzeichnet, dass das reaktive Metall (10) blechförmig ist.

6. Verfahren nach Anspruch 5, dadurch gekennzeichnet, dass das reaktive Metall aus mindestens zwei stapelartig angeordneten Blechen (10) besteht, wobei benachbarte Bleche nur durch Trennmittel der ersten Schicht (13) separiert werden.

7. Verfahren nach einem der Ansprüche 1 bis 6, dadurch gekennzeichnet, dass mindestens eines der Trennmittel als Dispersion aufgetragen wird.

8. Verfahren nach Anspruch 7, dadurch gekennzeichnet, dass beim Trennmittelauftrag mindestens eines der Trennmittel in Wasser dispergiert ist.

9. Verfahren nach Anspruch 8, dadurch gekennzeichnet, dass beim Trennmittelauftrag mindestens eines der Trennmittel in einer organischen, leichtflüchtigen Flüssigkeit dispergiert ist.

10. Paket (1) zum Herstellen von Metallfolien aus einem reaktiven Metall, gemäss einem der Ansprüche 1 bis 9, bestehend aus
mindestens einem blechförmigen Metallstück (10) aus dem reaktiven Metall, einer metallischen Kapsel (11) und Trennmitteln, dadurch gekennzeichnet, daß die Trennmittel zwischen Metallstück (10) und Kapselwand (11a, 11b) mindestens zwei Schichten (12, 13) bilden, wobei eine erste Schicht (13) die Oberfläche des Metallstücks (10) bedeckt und diese Schicht (13) aus feinkörnigen und scheibchenartigen Partikeln zusammengesetzt ist, die zwechs Abschirmung des reaktiven Metalls gegen Sauerstoff einer wesentlich dichtere Pachung als die Pulverpartikel (121) einer zweiten Schicht bestehen, und die aus Bornitrid, Siliziumnitrid, Zirkoniumoxid oder einem zu Bornitrid ähnlichen, sauerstoffabschirmenden Stoff bestehen, und die zweite Schicht (12) aus einem Trennmittel besteht, das gegenüber dem reaktiven Metall (10) inert sowie nicht metallisch ist, und das bei der Warmumformung plastisch verformbar oder hochviskos fliessfähig ist.

## Claims

1. Method of making thin-walled metal parts from reactive metal by hot forming of a pack (1) comprising a reactive metal piece (10) and a capsule (11), the reactive metal being embedded in the capsule, which consists of a second plastically deformable metal, and parting agents consisting of powder particles (121, 131), characterised in that the parting agents are applied between the capsule wall and the reactive metal in at least two layers (12, 13), the first layer (13) applied to the reactive metal being composed of particles (131) which are wafer-like and which for the purpose of shielding the reactive metal from oxygen form a substantially more compact packing than the powder particles (121) of a second layer (12), and which consist of fine-grained boron nitride, silicon nitride, zirconium oxide or an oxygen-shielding substance similar to boron nitride, and wherein the second layer (12) consists of a parting agent which is non-metallic and is inert with respect to the reactive metal (10) and which is plastically deformable or of high-viscosity fluidity during the hot-forming.

2. Method according to claim 1, characterised in that the reactive metal (10) is an intermetallic phase.

3. Method according to claim 1 or 2, characterised in that the parting agent of the second layer (12) consists of a substance which is a metal halide, in particular a metal fluoride.

4. Method according to claim 3, characterised in that the substance is calcium fluoride (CaF₂).

5. Method according to one of claims 1 to 4, characterised in that the reactive metal (10) is in the form of a sheet.

6. Method according to claim 5, characterised in that the reactive metal consists of at least two sheets (10) arranged like a stack, with adjacent sheets being separated just by parting agents of the first layer (13).

7. Method according to one of claims 1 to 6, characterised in that at least one of the parting agents is applied as a dispersion.

8. Method according to claim 7, characterised in that at least one of the parting agents which is applied is dispersed in water.

9. Method according to claim 8, characterised in that at least one of the parting agents which is applied is dispersed in an organic, readily volatile liquid.

10. A pack (1) for producing metal foil from a reactive metal according to one of claims 1 to 9, consisting of at least one sheet-like metal piece (10) of the reactive metal, a metallic capsule (11) and parting agents, characterised in that the parting agents form at least two layers (12, 13) between the metal piece (10) and the capsule wall (11a, 11b), a first layer (13) covering the surface of the metal piece (10), said layer (13) being composed of fine-grained and wafer-like particles which, for the purpose of shielding the reactive metal from oxygen, form a substantially more compact packing than the powder particles (121) of a second layer, and which consist of boron nitride, silicon nitride, zirconium oxide or an oxygen-shielding substance similar to boron nitride, and the second layer (12) consists of a parting agent which is non-metallic and is inert with respect to the reactive metal (10) and which is plastically deformable or of high-viscosity fluidity during the hot-forming.

## Revendications

1. Procédé de fabrication de pièces métalliques minces, en un métal réactif, par forgeage à chaud d'un paquet (1), comprenant une pièce métallique (10) réactive et une capsule (11), le métal réactif étant noyé dans la capsule constituée d'un deuxième métal, déformable plastiquement, et ainsi que des agents de séparation constitués de particules pulvérulentes (121, 131), caractérisé en ce que les agents de séparation sont appliqués entre la paroi de capsule et le métal réactif en au moins deux couches (12, 13), la première, la couche (13) appliquée sur le métal réactif, étant constituée de particules (131) du genre de petits disques, qui constituent, dans le but d'isoler le métal réactif face à l'oxygène, un produit tassé de façon notablement plus dense que les particules pulvérulentes (121) d'une deuxième couche (12) et qui se composent de produit à grains fins, tel que le nitrure de bore, le nitrure de silicium, l'oxyde de zirconium ou d'une substance isolante de l'oxygène, analogue au nitrure de bore, la deuxième couche (12) étant constituée d'un agent de séparation, qui est inerte vis-à-vis du métal réactif (10) et qui n'est pas métallique, et qui est déformable plastiquement ou bien présente une fluidité à forte viscosité lors du forgeage à chaud;

2. Procédé selon la revendication 1, caractérisé en ce que le métal réactif (10) est une phase intermétallique.

3. Procédé selon l'une des revendications 1 ou 2, caractérisé en ce que l'agent de séparation de la deuxième couche (12) est constitué d'une substance appartenant aux halogénures métalliques, en particulier aux fluorures métalliques.

4. Procédé selon la revendication 3, caractérisé en ce que la substance est le fluorure de calcium (CaF₂).

5. Procédé selon l'une des revendications 1 à 4 caractérisé en ce que le métal réactif (10) se présente sous forme de tôle.

6. Procédé selon la revendication 5, caractérisé en ce que le métal réactif est constitué d'au moins deux tôles (10) disposées en empilage, des tôles voisines n'étant séparées que par l'agent de séparation de la première couche (13).

7. Procédé selon l'une des revendications 1 à 6, caractérisé en ce qu'au moins l'un des agents de séparation est appliqué sous forme de dispersion.

8. Procédé selon la revendication 7, caractérisé en ce que, lors de l'application de l'agent de séparation, au moins l'un des agents de séparation est dispersé dans de l'eau.

9. Procédé selon la revendication 8, caractérisé en ce que, lors de l'application de l'agent de séparation, au moins l'un des agents de séparation est dispersé dans un liquide organique, facilement volatil.

10. Paquet (1) pour la fabrication de feuilles métalliques à partir d'un métal réactif selon l'une des revendications 1 à 9, constitué d'au moins une pièce métallique (10) en forme de tôle constituée du métal réactif, d'une capsule métallique (11) et d'agents de séparation, caractérisé en ce que les agents de séparation constituent, entre la pièce métallique (10) et la paroi de capsule (11a, 11b), au moins deux couches (12, 13), une première couche (13) recouvrant la surface de la pièce métallique (10) et cette couche (13) étant constituée de particules à grains fins et du genre de petits disques, qui, dans le but d'assurer une isolation du métal réactif face à l'oxygène, sont constituées d'un produit tassé de façon notablement plus dense que les particules pulvérulentes (121) d'une deuxième couche, et les particules sont constituées de nitrure de bore, nitrure de silicium, oxyde de zirconium ou d'une substance analogue au nitrure de bore et isolante de l'oxygène, et la deuxième couche (12) est constituée d'un agent de séparation qui est inerte vis-à-vis du métal réactif (10) et qui n'est pas métallique et qui est déformable plastiquement ou bien présente une fluidité très visqueuse lors du forgeage à chaud.
